# EUROPÄISCHE PATENTSCHRIFT

(11) **EP 1 338 190 B1**
(45) Veröffentlichungstag und Bekanntmachung des Hinweises auf die Patenterteilung: **21.02.2007**
(21) Anmeldenummer: 03100222.3
(22) Anmeldetag: 04.02.2003
(51) Int. Cl.: A01F 12/40

(54) **Verteilvorrichtung für aus einer Erntemaschine austretendes Häckselgut**
Distributing device for chopped products discharged from a harvester
Dispositif de distribution pour des produits hachés issus d'une récolteuse

(30) Priorität: 22.02.2002 DE 10207479
(43) Veröffentlichungstag der Anmeldung: 27.08.2003
(73) Patentinhaber: DEERE & COMPANY, Moline, Illinois 61265-8098 (US)
(72) Erfinder: Bueermann, Martin, 89437, Haunsheim (DE)
(74) Vertreter: Holst, Sönke

(56) Entgegenhaltungen:
- EP-A- 0 537 621
- EP-A- 1 151 652
- WO-A-03/005803
- DE-A- 19 705 843
- DE-U- 8 014 119
- US-A- 4 921 469
- US-A- 5 569 081

## Beschreibung

Die Erfindung betrifft eine Verteilvorrichtung für aus einer Erntemaschine austretendes Häckselgut, mit einer Leiteinrichtung zum Vorgeben der Auswurfrichtung des Häckselguts, einem zum Verstellen der Auswurfrichtung der Leiteinrichtung eingerichteten Motor und einer Steuereinrichtung, die mit dem Motor sowie mindestens einer manuell betätigbaren Positionseingabeeinrichtung zur Eingabe der Position der Leiteinrichtung verbunden ist.

Beim Einsatz von Anbaustrohhäckslern an Mähdreschern ist es wünschenswert, an der Rückseite des Mähdreschers die gehäckselten Gutreste auf Schneidwerksbreite zu verteilen. Auf jeden Fall ist dabei zu vermeiden, dass gehäckseltes Erntegut in den stehenden, noch nicht geernteten Bestand geworfen wird. Speziell bei Seitenwind ist der Fahrer veranlasst, bei jedem Fahrtrichtungswechsel, der eine unterschiedliche Windanströmung des Mähdreschers bedingt, die Leitbleche des Strohhäckslers durch eine manuelle Eingabe in eine Eingabeeinrichtung zu verstellen. Die Eingabeeinrichtung bewirkt eine motorische Verstellung der Leitbleche. Bei bekannten Eingabeeinrichtungen ist ein Knopf so lange zu drücken, bis die Leitbleche in die gewünschte Position gelangt sind. Da gleichzeitig durch visuelle Überprüfung festgestellt werden muss, ob die Sollposition erreicht ist, ist der Verstellvorgang relativ zeitaufwändig und lenkt den Bediener von seiner eigentlichen Tätigkeit, der Lenkung und Bedienung des Mähdreschers, ab. Im Ergebnis wird die fortwährende Nachstellung der Leitbleche unterlassen und der Bediener stellt die Leitbleche auf eine recht geringe Verteilbreite ein, bei der kein Häckselgut in den noch stehenden Bestand geworfen wird. Die Folge ist, dass das Häckselgut nicht auf volle Schneidwerksbreite ausgeworfen wird. Das ist vor allem bei minimal invasiver Bodenbearbeitung (No Tillage) von Nachteil. Falls dennoch Häckselgut in den stehenden Bestand gelangt, kommt es oft zu Verstopfungen des Mähwerks.

Es wurden auch Verteilvorrichtungen vorgeschlagen, die mit Sensoren die Hangneigung und/oder Windrichtung und -stärke bzw. Flugrichtung des ausgeworfenen Häckselguts erfassen und die Leitbleche selbsttätig verstellen. Auch wurde vorgeschlagen, die Lage des stehenden Bestands relativ zum Mähdrescher durch manuelle Eingabe oder mit einer Videokamera zu detektieren und die Leitbleche in Abhängigkeit von der erkannten Lage zu verstellen. Es sind jedoch aufwändige Sensoren erforderlich.

In der EP 1 151 652 A wird eine Erntemaschine mit einem um die Hochachse drehbaren Auswurfkrümmer zur Übergabe gehäckselten Ernteguts in einen Laderaum eines Begleitfahrzeugs beschrieben. Eine Information über die jeweilige Position des Auswurfkrümmers wird abgespeichert. Nach Betätigung einer entsprechenden Taste wird der Auswurfkrümmer in die zur derzeitigen Position bezüglich der Längsachse der Erntemaschine gespiegelte Position gedreht, um das Begleitfahrzeug nach dem Umdrehen am Feldrand an derselben Position der Erntemaschine positionieren zu können.

Bei Mähdreschern der Modellreihe CTS der Anmelderin wird ein mit verschiedenen Tasten versehener Fahrhebel eingesetzt. Einige Tasten dienen zum Abrufen vorprogrammierter Höhen und Vorwärts/Rückwärts-Positionen der Haspel. Wenn eine Taste nur kurz gedrückt wird, werden die abgespeicherten Werte abgerufen. Wird sie länger gedrückt, wird eine später abrufbare Information über die derzeitige Position der Haspel abgespeichert.

Die der Erfindung zugrunde liegende Aufgabe wird darin gesehen, eine wenig aufwändige, aber bedienerfreundliche Einrichtung zur Einstellung der Leitelemente bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung schlägt vor, dass die Steuereinrichtung zumindest in einer ersten und einer zweiten auswählbaren Betriebsart betreibbar ist. Die erste Betriebsart wird ausgewählt, indem die vom Bediener betätigbare Positionseingabeeinrichtung nur relativ kurz betätigt wird, d. h. für eine Zeitdauer, die unterhalb eines vorbestimmten Schwellenwerts liegt. In der ersten Betriebsart veranlasst die Steuereinrichtung, dass der Motor die Leiteinrichtung in eine vorbestimmte Stellung verbringt. Die zweite Betriebsart wird durch Betätigung derselben Positionseingabeeinrichtung ausgewählt, indem sie für eine längere Zeitdauer, die oberhalb des Schwellenwerts liegt, betätigt wird. In der zweiten Betriebsart veranlasst die Steuereinrichtung, dass der Motor die Leiteinrichtung so lange bewegt, wie die Positionseingabeeinrichtung betätigt wird.

Auf diese Weise erreicht man, dass der Bediener durch Betätigung derselben Positionseingabeeinrichtung zum einen (durch kurze Betätigung) eine vorbestimmte Stellung der Leiteinrichtung abrufen und zum anderen (durch längere Betätigung) die Leiteinrichtung derart lange verstellen kann, bis sie in eine gewünschte Position gelangt ist. Für zwei unterschiedliche Funktionen ist somit nur eine einzige Positionseingabeeinrichtung vorzusehen, was die Anzahl der Teile und den von ihnen beanspruchten Platz vermindert.

Obwohl denkbar wäre, nur eine Positionseingabeeinrichtung vorzusehen, mit der die Leiteinrichtung in einer Drehrichtung um 360° verstellt wird oder denen eine Verstellrichtung zugeordnet ist, welche durch einen Schalter o. ä. umkehrbar ist, sind in der Regel mindestens zwei Positionseingabeeinrichtungen vorhanden, denen jeweils unterschiedliche, entgegengesetzte Verstellrichtungen der Leiteinrichtung zugeordnet sind.

In der ersten Betriebsart verbringt der Motor die Leiteinrichtung in eine vorbestimmte Position. Bei dieser Position kann es sich um eine Position handeln, die einer in einem Speicher abgelegten Positionsinformation entspricht. Der Bediener kann dann durch Auswahl der ersten Betriebsart die gewünschte Position abrufen. Falls mehrere Positionseingabeeinrichtungen vorhanden sind, sind mehrere Positionen abrufbar. In vielen Fällen, beispielsweise nach einem Fahrtrichtungswechsel, ist es jedoch sinnvoll, die Leiteinrichtung in eine Stellung zu verbringen, die symmetrisch zur bisherigen Stellung der Leiteinrichtung bezüglich der Längsmittelebene der Erntemaschine ist. Sind die Leitbleche der Leiteinrichtung somit anfangs beispielsweise um 20° gegenüber der Längsachse nach links verschwenkt, um zu vermeiden, dass Erntegutreste in den auf der rechten Seite der Erntemaschine stehenden Bestand gelangen, wird die Leiteinrichtung nach dem Wenden am Feldende bei Aktivierung der ersten Betriebsart um 40° nach rechts verschwenkt, so dass sie sich gegenüber der Längsmittelebene um 20° rechts befindet, da dann der Bestand auf der linken Seite der Erntemaschine liegt. Es kann aber auch der zuletzt eingestellte Wert jenseits der Längsachse angefahren werden, so dass auch unsymmetrische Stellungen angefahren werden können. Letzteres kann beispielsweise bei Seitenwind sinnvoll sein, da dann in der ersten Fahrtrichtung die Leiteinrichtung weniger weit (oder weiter) verstellt werden muss als in der anderen Fahrtrichtung.

Um die Leiteinrichtung in die zur bisherigen Stellung symmetrische, an der Längsmittelebene gespiegelte Stellung verbringen zu können, bietet es sich an, nach Beendigung der zweiten Betriebsart bzw. vor einer Aufnahme der ersten Betriebsart eine Information über die derzeitige Stellung der Leiteinrichtung abzuspeichern. Die Steuereinrichtung verbringt dann die Leiteinrichtung entsprechend der abgespeicherten Information in die gespiegelte oder zuletzt auf der anderen Seite angefahrene Stellung.

Der vorbestimmte Schwellenwert für die erste Zeitdauer, nach deren Ablauf die Steuereinrichtung in die zweite Betriebsart übergeht, ist vorzugsweise veränderbar. Er kann beispielsweise über eine Tastatur in einen Bordcomputer der Erntemaschine eingegeben werden.

Falls ein Bediener die Leiteinrichtung um einen kleineren oder größeren Betrag weiter verstellen will, nachdem er sie in der zweiten Betriebsart bewegt hat, wäre es wenig hilfreich, wenn die Leiteinrichtung auf eine weitere Betätigung der Positionseingabeeinrichtung hin in der ersten Betriebsart in die vorbestimmte Position verbracht würde. In einer bevorzugten Ausführungsform geht daher die Steuereinrichtung in eine dritte Betriebsart über, nachdem die zweite Betriebsart verlassen wurde, d. h. die Positionseingabeeinrichtung nicht mehr betätigt wird. In der dritten Betriebsart wird beim Betätigen der Positionseingabeeinrichtung - unter Umgehung der in diesem Fall zu einer unerwünschten Verstellung der Leiteinrichtung führenden ersten Betriebsart - sofort die zweite Betriebsart aufgerufen, in der die Leiteinrichtung so lange bewegt wird, wie die Positionseingabeeinrichtung betätigt wird. Die dritte Betriebsart ist für eine vorbestimmte (zweite) Zeitdauer aktiv, deren Betrag vorzugsweise veränderbar ist, insbesondere mittels einer Tastatur. Falls zwei Positionseingabeeinrichtungen vorhanden sind, denen entgegengesetzte Verstellrichtungen der Leiteinrichtung zugeordnet sind, wird nach Beendigung der zweiten Betriebsart zweckmäßigerweise jeweils für beide Positionseingabeeinrichtungen die dritte Betriebsart aktiviert, so dass dann eine Feineinstellung der Leiteinrichtung durch Betätigen der zwei Positionseingabeeinrichtungen in beiden Richtungen möglich ist.

Die Erfindung kann an Mähdreschern Verwendung finden, bei denen die Leiteinrichtung einem Strohhäcksler nachgeordnet ist. Sie ist auch an Feldhäckslern verwendbar, deren Leiteinrichtung ein stromab einer Häckseltrommel angeordneter Auswurfkrümmer ist.

Bei der Leiteinrichtung kann es sich um an sich bekannte Leitbleche handeln, die einem Strohhäcksler nachgeordnet und an einer Strohverteilerhaube angebracht sind. Andererseits kann die Leiteinrichtung auch ein Schacht sein, der einem Gebläse nachgeordnet ist. Der Schacht kann auch einem Häcksler, beispielsweise einem Scheibenradhäcksler, nachgeordnet sein. Ein derartiger Schacht kann kontinuierlich um eine etwa vertikale Achse hin- und hergeschwenkt werden, um eine hinreichende Breite abzudecken, die vorzugsweise etwa der Schneidwerksbreite entspricht. Die Erfindung ermöglicht, den Bewegungsbereich des Schachts selbsttätig auf eingebbare Grenzen einzustellen.

Bei einigen Erntemaschinen ist ein derartiger, mit einem Schacht zum Auswerfen des gehäckselten Gutes ausgestatteter Häcksler aus der Betriebsposition, in der Stroh ausgeworfen wird, in eine Außerbetriebsposition verbringbar, in der die von der Reinigungseinrichtung ausgeworfene Spreu durch den Häcksler und den Schacht hindurch ausgeworfen wird. Vorzugsweise wird der sich in der Außerbetriebsstellung befindende Schacht durch die Steuereinrichtung und den Motor in eine eingebbare Stellung verbracht. Diese Ausführungsform ist besonders dann sinnvoll, wenn nur ein einziger Häcksler mit nur einem Schacht vorhanden ist.

In den Zeichnungen ist ein nachfolgend näher beschriebenes Ausführungsbeispiel der Erfindung dargestellt. Es zeigt:
- Fig. 1: eine Erntemaschine mit einer erfindungsgemäßen Verteilvorrichtung;
- Fig. 2: ein Schema der Steuereinrichtung der Verteilvorrichtung;
- Fig. 3: ein Flussdiagramm einer Routine zur Verstellung der Verteilvorrichtung nach links; und
- Fig. 4: ein Flussdiagramm einer Routine zur Verstellung der Verteilvorrichtung nach rechts.

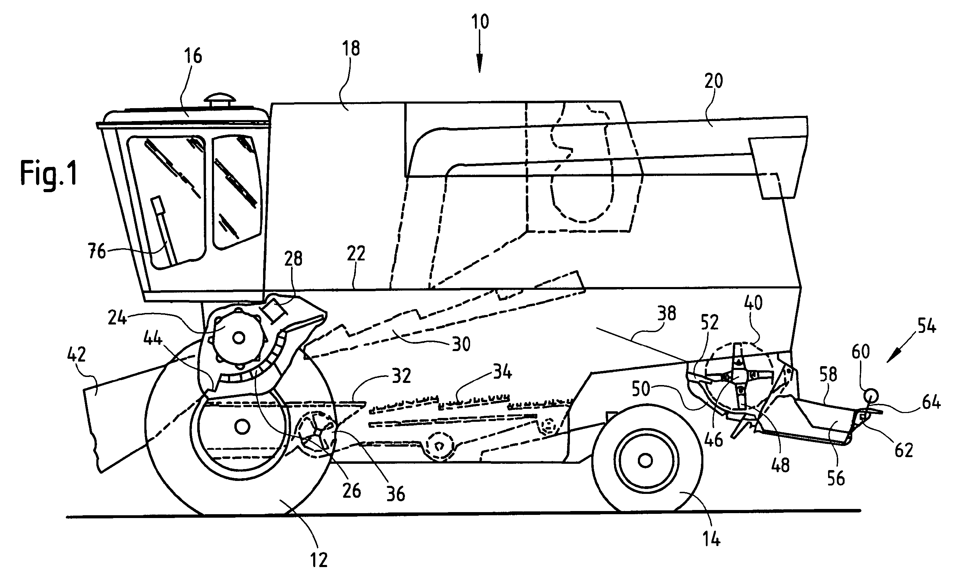

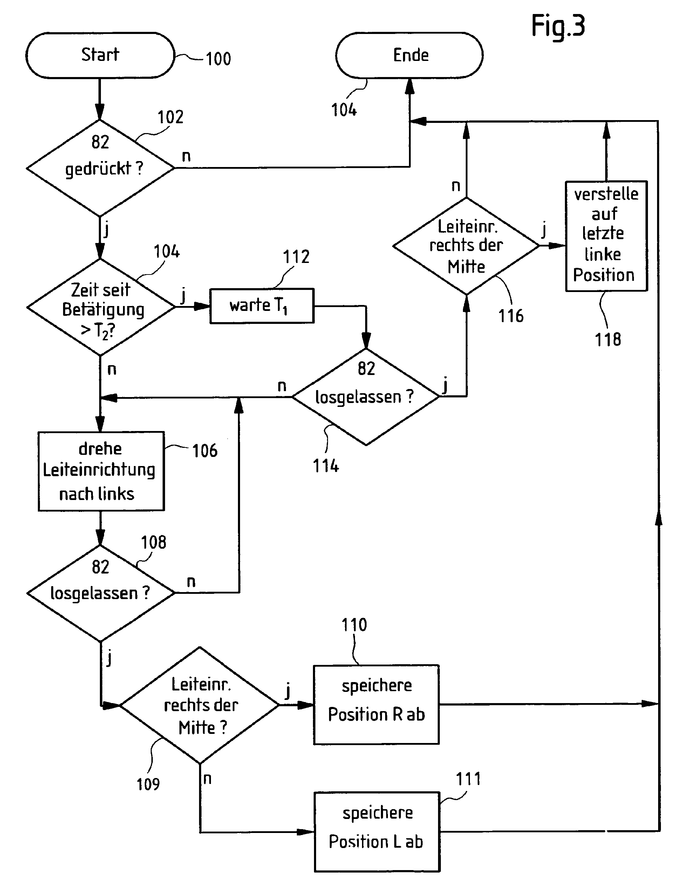

Eine in Figur 1 gezeigte Erntemaschine 10 in der Form eines selbstfahrenden Mähdreschers ist auf vorderen angetriebenen und rückwärtigen lenkbaren Rädern 12 bzw. 14 getragen und weist eine Fahrerkabine 16 auf, von der aus sie von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 und ein Strohleitblech 38 einem Strohhäcksler 40 zugeführt werden und leichte Bestandteile mittels eines Gebläses 36 von den Sieben 34 auf den Boden geblasen werden. Auf dem Boden liegendes oder stehendes Gut wird über einen Schrägförderer 42 und eine Steinfangmulde 44 der Dreschtrommel 24 zugeführt, nachdem es von einer in Figur 3 gezeigten Erntegutbergungsvorrichtung 84 vom Boden aufgenommen worden ist.

Der Strohhäcksler 40 umfasst einen Rotor 46 mit um seinen Umfang und über seine Länge verteilten, pendelnd aufgehängten Schlegeln 48, der in einem Gehäuse 50 um eine etwa horizontale, quer zur Fahrtrichtung verlaufende Achse rotiert. Im Zusammenwirken mit Gegenmessern 52 werden die ausgedroschenen, großen Erntegutteile zu Häckselgut zerkleinert.

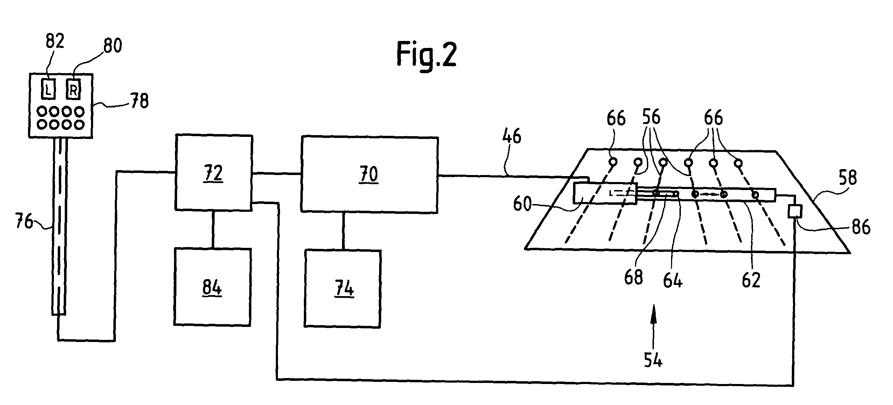

An der Rückseite des Strohhäckslers 40 ist eine in Figur 2 detaillierter dargestellte Verteilvorrichtung 54 angeordnet, die eine Anzahl seitlich nebeneinander angeordneter Leiteinrichtungen 56 in Form von Strohleitblechen umfasst, welche unterhalb einer Strohverteilerhaube 58 angeordnet sind. Die an ihrem in Fahrtrichtung vorderen Ende um eine vertikale Achse 66 schwenkbar an der Strohverteilerhaube 58 angelenkten Leiteinrichtungen 56 sind in ihrem in Fahrtrichtung weiter hinten liegenden Bereich durch einen Schieber 62 untereinander gekoppelt, der durch eine sich durch einen Schlitz in der Strohverteilerhaube 58 nach oben erstreckende Kopplungsstange 64 mit einem Motor 60 in Form eines doppeltwirkenden Hydraulikzylinders mit einer Kolbenstange 68 verbunden ist.

Denkbar wäre auch die Verwendung eines Elektromotors als Motor 60. Auf diese Weise ist der Motor 60 eingerichtet, die rückwärtigen Enden der Leiteinrichtungen 56 quer zur Fahrtrichtung zu verstellen und die Auswurfrichtung der Leiteinrichtungen 56, an denen das Häckselgut vorbeiströmt, vorzugeben. Weiterhin ist es denkbar, dass jeweils die linke und rechte Hälfte der Leitbleche von je einem separaten Motor verstellbar sind.

Anhand der Figur 2 ist erkennbar, dass der Motor 60 durch einen Ventilzusammenbau 70 mit einer Quelle 74 unter Druck stehenden Hydraulikfluids verbindbar ist. Der Ventilzusammenbau 70 wird elektromagnetisch durch eine elektronische Steuereinrichtung 72 gesteuert. Ein mechanisch mit dem Schieber 62 gekoppelter Sensor 86, der beispielsweise als Schiebepotentiometer realisiert sein kann, ist mit der Steuereinrichtung 72 verbunden, um ihr zu Rückkopplungszwecken ein Signal zuzuführen, das eine Information über die Stellung des Schiebers 62 enthält.

In der Fahrerkabine 16 ist neben einem Fahrersitz ein Fahrhebel 76 angeordnet. Er ist um eine horizontale, quer zur Fahrtrichtung verlaufende Achse verschwenkbar und dient zur Vorgabe der Vortriebsgeschwindigkeit der Erntemaschine 10 auf einem Feld. An seiner Oberseite ist der Fahrhebel 76 mit einem Kopf 78 ausgestattet, an dem eine Reihe von drückbaren Tasten angeordnet sind. Zwei der Tasten dienen als Positionseingabeeinrichtungen 80, 82. Die rechte Positionseingabeeinrichtung 80 ist mit einem R beschriftet und dient zur Verstellung der Leiteinrichtungen 56 nach rechts. Die linke Positionseingabeeinrichtung 82 ist mit einem L beschriftet und dient zur Verstellung der Leiteinrichtungen 56 nach links. Weitere Tasten steuern andere Funktionen der Erntemaschine. Die Positionseingabeeinrichtungen 80, 82 sind über eine Leitung, insbesondere über eine Busleitung, mit der Steuereinrichtung 72 verbunden. Es wäre auch denkbar, die Positionseingabeeinrichtungen 80, 82 an einer beliebigen anderen Stelle in der Fahrerkabine 16 anzuordnen.

Die Steuereinrichtung 72 ist weiterhin mit einer nichtflüchtigen, batteriegestützten Speichereinrichtung 84 verbunden.

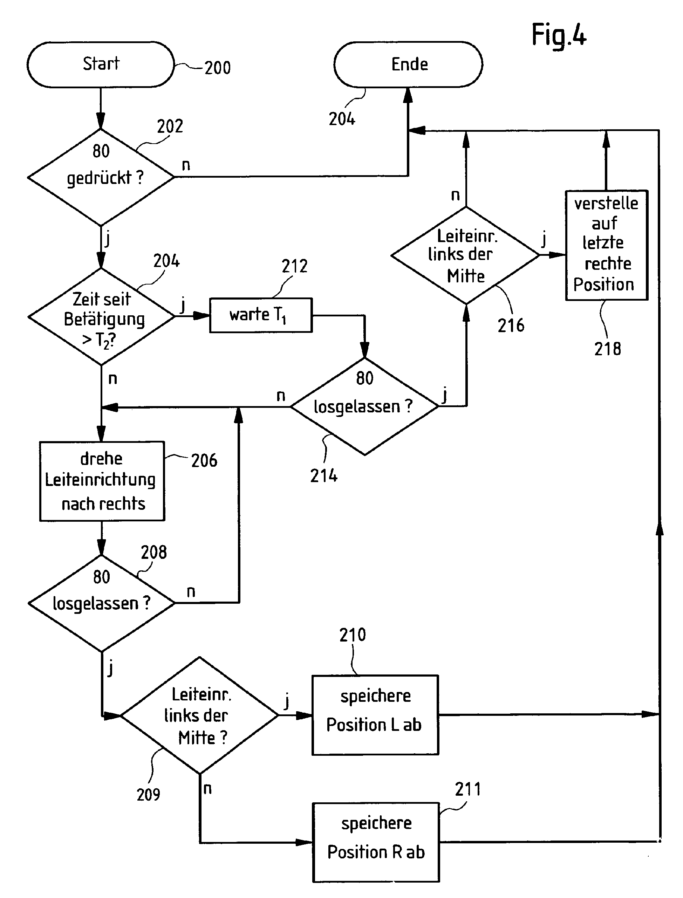

Im Betrieb führt die Steuereinrichtung 72 in relativ kurzen Zeitabständen (einige Millisekunden) nacheinander die in den Figuren 3 und 4 dargestellten Routinen durch.

Die in Figur 3 wiedergegebene Routine beginnt mit dem Start im Schritt 100, nach dem (Schritt 102) abgefragt wird, ob die Positionseingabeeinrichtung 82 (d. h. die mit L beschriftete Taste) gedrückt ist. Falls das nicht der Fall ist, wird die Routine in Schritt 104 beendet. Anderenfalls folgt Schritt 104, in dem abgefragt wird, ob seit der letzten Verstellung der Leiteinrichtung (Schritt 106 oder Schritt 206) eine Zeit vergangen ist, die größer als eine vorbestimmte Zeitdauer T2 ist. Ist diese Zeitdauer, die zum Beispiel 10 Sekunden betragen kann, noch nicht abgelaufen, befindet sich die Steuereinrichtung 72 in einem dritten Betriebsmodus, in dem die Betätigung der Positionseingabeeinrichtung 82 sofort eine Verstellung der Leiteinrichtung 54 in die der Positionseingabeeinrichtung 82 zugeordnete Richtung, also nach links, zur Folge hat. Somit folgt bei negativem Ergebnis der Abfrage in Schritt 104 der Schritt 106, in dem der Motor 60 aktiviert wird und die Leiteinrichtung 54 nach links bewegt. Nach Schritt 106 folgt Schritt 108, in dem abgefragt wird, ob die Positionseingabeeinrichtung 82 vom Bediener wieder losgelassen wurde. Falls nein, folgt wieder Schritt 106. Ist das aber der Fall, folgt Schritt 109, in dem abgefragt wird, ob sich die Leiteinrichtung 54 rechts der Mitte befindet. Ist das der Fall, folgt Schritt 110, in dem eine aus dem Messwert des Sensors 86 abgeleitete Information über die jeweilige Position der Leiteinrichtung 54 auf der rechten Seite in der Speichereinrichtung 84 abgelegt wird, und auf den die Routine im Schritt 104 beendet wird. Anderenfalls folgt Schritt 111, in dem eine aus dem Messwert des Sensors 86 abgeleitete Information über die jeweilige Position der Leiteinrichtung 54 auf der linken Seite in der Speichereinrichtung 84 abgelegt wird, und auf den die Routine im Schritt 104 beendet wird. Es ist also je nach der angesteuerten Position der Leiteinrichtung 54 möglich, Positionsdaten für die linke und rechte Seite abzuspeichern, was ein unsymmetrisches Ansteuern erleichtert. Wenn sich die Leiteinrichtung 54 anfangs rechts befindet und nur geringfügig nach links verstellt wird, verbleibt sie auf der rechten Seite. Ihre Positionsinformation wird dann im Schritt 110 als rechte Stellung abgespeichert. Wird sie aber über die Mitte hinaus nach links verstellt, wird sie im Schritt 111 als linke Stellung abgespeichert. Beim späteren Drücken der Tasten 80 bzw. 82 wird die den Positionen links bzw. rechts zugeordnete Information abgerufen.

Falls Schritt 104 ergibt, dass seit der letzten Verstellung der Leiteinrichtung 54 in Schritt 106 eine Zeit vergangen ist, die größer als die Zeitdauer T2 ist, kann die Steuereinrichtung in den ersten oder zweiten Betriebsmodus übergehen. Es folgt dann auf Schritt 104 der Schritt 112, in dem eine vorbestimmte Zeitdauer T1 (z. B. 2 Sekunden) abgewartet wird. Anschließend folgt der Schritt 114, in dem abgefragt wird, ob die Positionseingabeeinrichtung 82 inzwischen losgelassen wurde. Falls das der Fall ist, die Positionseingabeeinrichtung 82 somit nur für eine relativ kurze Zeit betätigt wurde, folgt Schritt 116, in dem die Steuereinrichtung 72 abfragt, ob sich die Leiteinrichtung 54 rechts der Mitte befindet. Ist das nicht der Fall, folgt Schritt 104, sonst Schritt 118, in dem die Steuereinrichtung 72 in die erste Betriebsart übergeht und veranlasst, dass der Motor 60 die Leiteinrichtung 54 in eine Stellung verbringt, die dem zuletzt gespeicherten Wert auf der linken Seite entspricht. Denkbar wäre auch, dass die Leiteinrichtung in die Position verbracht wird, die bezüglich der Längsmittelebene der Erntemaschine 10 symmetrisch zu der Position ist, die der in der Speichereinrichtung 84 abgelegten Information entspricht. Dabei werden die Signale des Sensors 86 und die Information aus der Speichereinrichtung 84 verwendet. Da die Speichereinrichtung 84 nichtflüchtig ist und die Stellung der Leiteinrichtung 56 außer beim symmetrischen Verstellen in Schritt 118, bei dem aber eine Information über die jeweilige Position erhalten bleibt, nur über Schritt 108 veränderbar ist, auf den Schritt 110 oder 111 folgt, ist in ihr stets eine aktuelle Positionsinformation abgelegt. Anzumerken ist, dass Schritt 116 übersprungen wird, wenn sich die Leiteinrichtung bereits links befindet, ggf. begleitet von einer akustischen und/oder optischen Fehlermeldung. In diesem Fall müsste der Bediener die andere Positionseingabeeinrichtung 80 kurz betätigen, um die Leiteinrichtung 56 auf die rechte Seite zu verschwenken.

Falls Schritt 82 ergibt, dass die Positionseingabeeinrichtung 82 noch nicht losgelassen wurde, folgt wieder Schritt 106. Die Steuereinrichtung geht somit in die zweite Betriebsart über, in der die Positionseingabeeinrichtung 80 ein Verstellen der Leiteinrichtung 54 nach links bewirkt.

Die in Figur 4 dargestellte Routine entspricht im Wesentlichen der in Figur 3 dargestellten; es wird jedoch jeweils abgefragt, ob die mit R gekennzeichnete Positionseingabeeinrichtung 80 betätigt wurde und im Schritt 206 wird die Leiteinrichtung 54 nach rechts gedreht. Anzumerken bleibt, dass in den Schritten 104 und 204 die Zeit abgeprüft wird, die seit einer beliebigen Bewegung der Leiteinrichtung 54, d. h. unabhängig davon, ob sie nach in Schritt 106 nach links oder in Schritt 206 nach rechts verstellt wurde, vergangen ist. Außerdem sind geeignete Maßnahmen zu treffen, falls beide Positionseingabevorrichtungen 80, 82 exakt gleichzeitig betätigt werden.

Im Ergebnis ermöglicht die erfindungsgemäße Verteilvorrichtung 54, die Leiteinrichtung 56 mit denselben Positionseingabeeinrichtungen 80 und 82 in unterschiedlichen, wählbaren Betriebsarten zu verstellen. In der ersten, durch kurzes Betätigen einer der Positionseingabeeinrichtungen 80, 82 aktivierbaren Betriebsart (Schritt 116 und 216) wird jeweils die zuletzt auf der anderen Seite der Längsmittelebene angefahrene (oder die zur aktuellen Stellung zur Längsmittelebene symmetrische) Stellung angefahren. Diese Betriebsart ermöglicht bei einem Fahrtrichtungswechsel eine einfache Anpassung der Leiteinrichtung 56 an die neuen Bedingungen. In der zweiten, über eine Zeitdauer, die länger als T1 ist, bewerkstelligtes Betätigen einer der Positionseingabeeinrichtungen 80, 82 auswählbaren Betriebsart wird die Leiteinrichtung 56 so lange bewegt, wie die Positionseingabeeinrichtung 80, 82 betätigt wird, wobei ein Verstellbereich vorgegeben sein kann, an dessen Ende der Motor 60 selbsttätig abgeschaltet wird. Nachdem die Positionseingabeeinrichtung 80, 82 in der zweiten Betriebsart nicht mehr betätigt wurde, tritt die dritte Betriebsart in Kraft, in der für eine Zeitdauer T2 eine Betätigung der Positionseingabeeinrichtung sofort in die zweite Betriebsart führt.

## Patentansprüche

1. Verteilvorrichtung (54) für aus einer Erntemaschine (10) austretendes Häckselgut, mit einer Leiteinrichtung (56) zum Vorgeben der Auswurfrichtung des Häckselguts, einem zum Verstellen der Auswurfrichtung der Leiteinrichtung (56) eingerichteten Motor (60) und einer Steuereinrichtung (72), die mit dem Motor (60) sowie mindestens einer vom Bediener betätigbaren Positionseingabeeinrichtung (80, 82) zur Eingabe der Position der Leiteinrichtung (56) verbunden ist, **dadurch gekennzeichnet, dass** die Steuereinrichtung (72) wahlweise in einer ersten Betriebsart und einer zweiten Betriebsart betreibbar ist, wobei die erste Betriebsart bei einer Betätigung der Positionseingabeeinrichtung (80, 82) für eine Zeitdauer, die unter einem vorbestimmten Schwellenwert liegt, aktiviert wird und die zweite Betriebsart bei einer Betätigung der Positionseingabeeinrichtung (80, 82) für eine Zeitdauer, die über dem vorbestimmten Schwellenwert liegt, aktiviert wird und dass die Steuereinrichtung (72) den Motor (60) in der ersten Betriebsart derart ansteuert, dass die Leiteinrichtung (56) in eine vorbestimmte Position verbracht wird und in der zweiten Betriebsart den Motor (60) aktiviert, solange die Positionseingabeeinrichtung (78) betätigt ist.

2. Verteilvorrichtung nach Anspruch 1, **dadurch gekennzeichnet, dass** zwei Positionseingabeeinrichtungen (80, 82) vorhanden sind, denen entgegengesetzte Bewegungsrichtungen der Leiteinrichtung (56) zugeordnet sind.

3. Verteilvorrichtung nach Anspruch 1 oder 2, **dadurch gekennzeichnet, dass** die Steuereinrichtung (72) den Motor (78) in der ersten Betriebsart derart ansteuert, dass die Leiteinrichtung (56) in eine zu ihrer derzeitigen Position bezüglich der Längsachse der Erntemaschine (10) symmetrische Position oder in die zuletzt auf der gegenüberliegenden Seite angesteuerte Position verbracht wird.

4. Verteilvorrichtung (54) nach einem der vorhergehenden Ansprüche, **dadurch gekennzeichnet, dass** die Steuereinrichtung (72) nach Beendigung der zweiten Betriebsart und/oder vor Aufnahme der ersten Betriebsart eine Information über die jeweilige Stellung der Leiteinrichtung (56) abspeichert.

5. Verteilvorrichtung (54) nach einem der vorhergehenden Ansprüche, **dadurch gekennzeichnet, dass** der vorbestimmte Schwellenwert für die Zeitdauer veränderbar, insbesondere eingebbar ist.

6. Verteilvorrichtung (54) nach einem der vorhergehenden Ansprüche, **dadurch gekennzeichnet, dass** die Steuereinrichtung (72) nach dem Verlassen der zweiten Betriebsart für eine vorbestimmte, zweite Zeitdauer in eine dritte Betriebsart übergeht, in der nach einer Betätigung der Positionseingabevorrichtung (78) sofort die zweite Betriebsart aktiv ist.

7. Verteilvorrichtung (54) nach Anspruch 6, **dadurch gekennzeichnet, dass** die Länge der zweiten Zeitdauer veränderbar, insbesondere eingebbar ist.

8. Verteilvorrichtung (54) nach einem der vorhergehenden Ansprüche, **dadurch gekennzeichnet, dass** die Leiteinrichtung (56) einem Strohhäcksler (40) nachgeordnet ist.

9. Verteilvorrichtung (54) nach einem der vorhergehenden Ansprüche, **dadurch gekennzeichnet, dass** die Leiteinrichtung (56) ein oder mehrere Leitbleche umfasst.

10. Erntemaschine (10), insbesondere Mähdrescher oder Feldhäcksler, mit einer Verteilvorrichtung (54) nach einem der vorhergehenden Ansprüche.

## Claims

1. A distributing device (54) for chopped material emerging from a harvesting machine (10), with a guide device (56) for determining the direction of ejection of the chopped material, a motor (60) arranged to adjust the direction of ejection of the guide device (56), and a control device (72), which is connected to the motor (60) as well as to at least one position input device (80, 82) operable by the operator for entering the position of the guide device (56), **characterised in that** the control device (72) is operable selectively in a first mode of operation and a second mode of operation, wherein the first mode of operation is activated on actuation of the position input device (80, 82) for a duration which lies below a predetermined threshold value, and the second mode of operation is activated on actuation of the position input device (80, 82) for a duration which lies above the predetermined threshold value, and **in that** the control device (72) so controls the motor (60) in the first mode of operation that the guide device (56) is brought into a predetermined position and in the second mode of operation the motor (60) is activated for so long as the position input device (78) is actuated.

2. A distributing device according to claim 1, **characterised in that** two position input devices (80, 82) are provided and are associated with opposite directions of movement of the guide device (56).

3. A distributing device according to claim 1 or 2, **characterised in that** the control device (72) so controls the motor (60) in the first mode of operation that the guide device (56) is brought into a position symmetrical with respect to its current position in relation to the longitudinal axis of the harvesting machine (10), or into the position into the last controlled position on the opposite side.

4. A distributing device (54) according to any of the preceding claims, **characterised in that** the control device (72) stores information regarding the current position of the guide device (56) on the termination of the second mode of operation and/or for taking up the first mode of operation.

5. A distributing device (54) according to any of the preceding claims, **characterised in that** when a the predetermined threshold value for the duration is variable, in particular can be input.

6. A distributing device (54) according to any of the preceding claims, **characterised in that** the control device (72) passes after leaving the second mode of operation into a third mode of operation for a predetermined second duration, in which the second mode of operation is active straightway after an actuation of the position input device (78).

7. A distributing device (54) according to claim 6, **characterised in that** the length of the second duration is variable, in particular can be input.

8. A distributing device (54) according to any of the preceding claims, **characterised in that** the guide device (56) is arranged after a straw chopper (40).

9. A distributing device (54) according to any of the preceding claims, **characterised in that** the guide device (56) comprises one or more guide plates.

10. A harvesting machine (10), especially a combine harvester or a forage harvester, with a distributing device (54) according to any of the preceding claims.

## Revendications

1. Dispositif de distribution (54) de produits hachés sortant d'une machine de récolte (10), comportant un dispositif de guidage (56), destiné à définir la direction d'éjection des produits hachés, un moteur (60), conçu pour régler la direction d'éjection du dispositif de guidage (56), et un dispositif de commande (72), qui est relié au moteur (60), ainsi qu'à au moins un dispositif d'entrée de position (80, 82), apte à être actionné par la personne de service et prévu pour entrer la position du dispositif de guidage (56), **caractérisé en ce que** le dispositif de commande (72) peut être activé au choix dans un premier mode de service et dans un deuxième mode de service, le premier mode de service étant activé lors d'un actionnement du dispositif d'entrée de position (80, 82) pour un laps de temps qui est inférieur à une valeur seuil prédéfinie, et le deuxième mode de service étant activé lors d'un actionnement du dispositif d'entrée de position (80, 82) pour un laps de temps qui est supérieur à une valeur seuil prédéfinie, et **en ce que** le dispositif de commande (72) active le moteur (60) dans le premier mode de service de telle sorte que le dispositif de guidage (56) est amené dans une position prédéfinie, et active le moteur (60) dans le deuxième mode de service tant que le dispositif d'entrée de position (78) est actionné.

2. Dispositif de distribution selon la revendication 1, **caractérisé en ce que** deux dispositifs d'entrée de position (80, 82) sont présents, auxquels sont associées des directions de mouvement opposées du dispositif de guidage (56).

3. Dispositif de distribution selon la revendication 1 ou 2, **caractérisé en ce que** le dispositif de commande (72) active le moteur (60) dans le premier mode de service de telle sorte que le dispositif de guidage (56) est amené dans une position symétrique à sa position actuelle par rapport à l'axe longitudinal de la machine de récolte (10) ou dans la position activée en dernier lieu sur le côté opposé.

4. Dispositif de distribution (54) selon l'une quelconque des revendications précédentes, **caractérisé en ce que** le dispositif de commande (72), à la fin du deuxième mode de service et/ou avant l'entrée dans le premier mode de service, enregistre en mémoire une information sur la position respective du dispositif de guidage (56).

5. Dispositif de distribution (54) selon l'une quelconque des revendications précédentes, **caractérisé en ce que** la valeur seuil prédéfinie pour le laps de temps est modifiable, en particulier par introduction.

6. Dispositif de distribution (54) selon l'une quelconque des revendications précédentes, **caractérisé en ce que** le dispositif de commande (72), à la sortie du deuxième mode de service, passe dans un troisième mode de service pour un deuxième laps de temps prédéfini, dans lequel le deuxième mode de service est activé immédiatement après l'actionnement du dispositif d'entrée de position (78).

7. Dispositif de distribution (54) selon la revendication 6, **caractérisé en ce que** la durée du deuxième laps de temps est modifiable, en particulier par introduction.

8. Dispositif de distribution (54) selon l'une quelconque des revendications précédentes, **caractérisé en ce que** le dispositif de guidage (56) est monté en aval d'un hache-paille (40).

9. Dispositif de distribution (54) selon l'une quelconque des revendications précédentes, **caractérisé en ce que** le dispositif de guidage (56) est formé par une ou plusieurs tôles déflectrices.

10. Machine de récolte (10), en particulier moissonneuse-batteuse ou ensileuse, comportant un dispositif de distribution (54) selon l'une quelconque des revendications précédentes.
